Europäisches Patentamt

European Patent Office

Office européen des brevets

(19)

(11) Publication number: **0 182 943**
A1

(12) **EUROPEAN PATENT APPLICATION**

(21) Application number: **84308120.9**

(22) Date of filing: **22.11.84**

(51) Int. Cl.⁴: **B 01 L 3/02**
G 01 N 35/06, B 29 C 55/22

(43) Date of publication of application:
04.06.86 Bulletin 86/23

(84) Designated Contracting States:
DE FR GB

(71) Applicant: Atake, Minoru
579-6, Ohoiso Ohoiso-machi
Naka-gun Kanagawa-ken(JP)

(72) Inventor: Atake, Minoru
579-6, Ohoiso Ohoiso-machi
Naka-gun Kanagawa-ken(JP)

(74) Representative: Clifford, Frederick Alan et al,
MARKS & CLERK 57/60 Lincoln's Inn Fields
London WC2A 3LS(GB)

(54) Micro-pipette and device for its manufacture.

(57) A micro-pipette has a long "nose" with a small internal diameter uniform along its length, and may be made from synthetic polymeric material such as heat-shrinkable synthetic polymer. A device for manufacturing such micro-pipettes comprises means for engaging a forward end of the tube, means for heating part of the length of the tube in a position spaced from the forward end means for stretching the tube to decrease the diameter of the heated portion and means for cutting off the tube, thereby to form micro-pipettes. Usually the device works on a number of such tubes simultaneously.

FIG.1.

EP 0 182 943 A1

M&C FOLIO: 799P49286                    WANGDOC: 0173k

A MICRO-PIPETTE, A DEVICE FOR ITS MANUFACTURE

AND A METHOD FOR ITS USE

This invention relates to a micro-pipette as
predominantly used in medical inspection, and to a
device for its manufacture.

Known medical micro-pipettes are made from synthetic
polymer by injection-moulding for cheapness. Typically,
they are used once only to keep test material e.g. sera
from contamination by other test material when the
material is divided into a plurality of test tubes for
intensive investigation.

Known micro-pipettes cannot however be fabricated with a
long "nose" of small internal diameter using
injection-moulding, but have a conical end with a small
hole. Thus, subdivision of test material is of limited
precision.

This invention sets out to provide (a) a micro-pipette
capable of being used with high dividing precision and
of low cost (b) a device for manufacturing such a
micro-pipette in a simple system and (c) such a device
for manufacturing the micro-pipette including further features for dividing test material into a plurality of chambers such as test tubes in a stocker.

In one aspect the invention consists in a micro-pipette of synthetic polymeric material characterised by comprising a long "nose" region of small internal diameter uniform along its length.

Preferably such a pipette is formed by stretching a synthetic polymer tube which is heated over part of its length and thereafter severing the tube to define and separate the said micro-pipette.

In another aspect the invention provides a device for manufacturing such a micropipette which comprises means for engagement with a leading end of the said tube; means for heating part of the length of the said tube spaced from said leading end; means permitting relative displacement between the engagement means and the remainder of the tube beyond the heated part, whereby the heated part of the tube is stretched to a smaller diameter; and severing means transversely movable to cut at least the smaller diameter portion thereby to separate a micropipette from the tube.

In yet another aspect the invention comprises a vertically movable carriage; an inclined array of piston/cylinder arrangements each individually attached to draw up to express liquid from a micropipette dispenser; and an operating rod parallel to each piston having an arcuate surface at or near its upper end upon which the downward motion of the vertically movable carriage can be transferred by virtue of horizontally pivoted push members each having an individual adjustment means to adjust the initial inclination of its undersurface against the respective rod arcuate surface, whereby a uniform vertical movement of the carriage is individually and closely adjustable to provide different length strokes of each operating rod and thus adjust for differences in pipette volume.

The invention will be further described with reference to the accompanying drawings, in which:-

Figure 1 is a longitudinal section of a micro-pipette embodying the present invention;

Figure 2 is a longitudinal section of another embodiment of micro-pipette according to the invention;

Figure 3 is a partly broken away side view of a device for manufacturing such micropipettes;

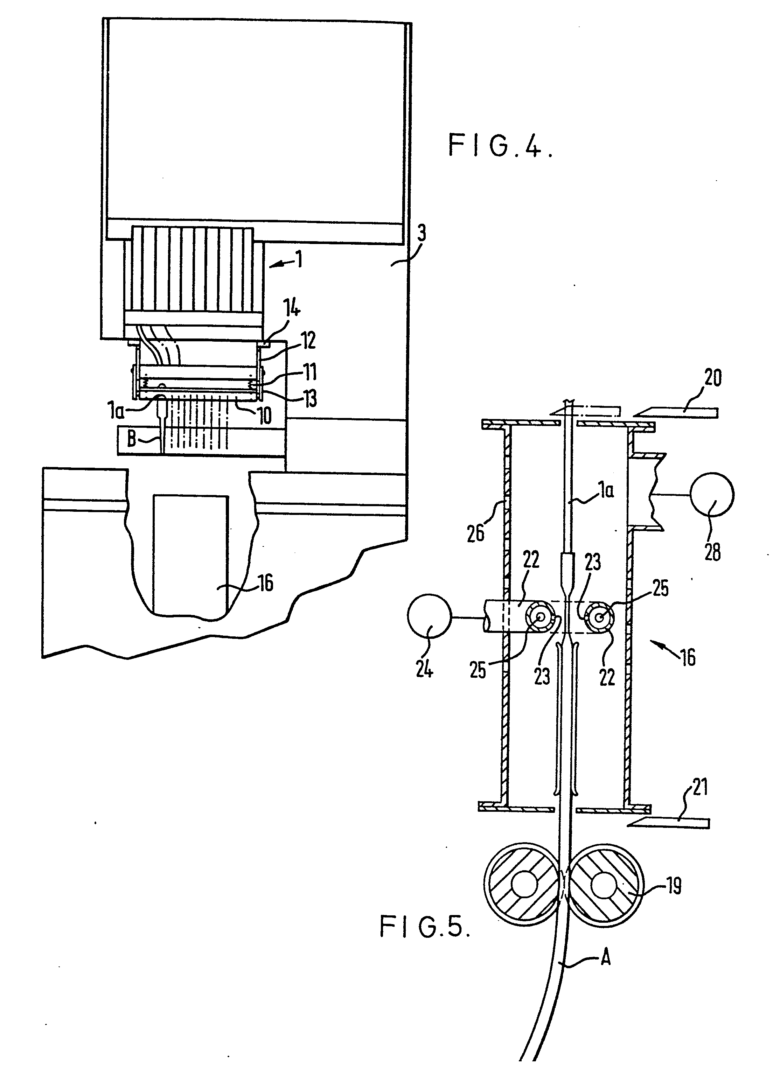

Figure 4 is a front view of part of the device of Figure 3;

Figure 5 shows means for heating a tube of synthetic resin, being a part of the device of Figures 3 and 4;

Figure 6 (a) to (h) indicate the successive steps of manufacturing the micro-pipettes shown in longitudinal section;

Figure 7 is a partly broken away side view of a device for manufacturing micro-pipettes in use as a stage in equipment for subdividing test material by such pipettes;

Figure 8 (a) to (c) show successive steps of subdividing test material by micro-pipettes immediately after fabrication;

Figure 9 is a side view of a device for subdividing test material using the micro-pipettes as shown; and

Figures 10 (a) and (b) are diagrams which indicate the operation of the essential part of the device shown in Figure 9.

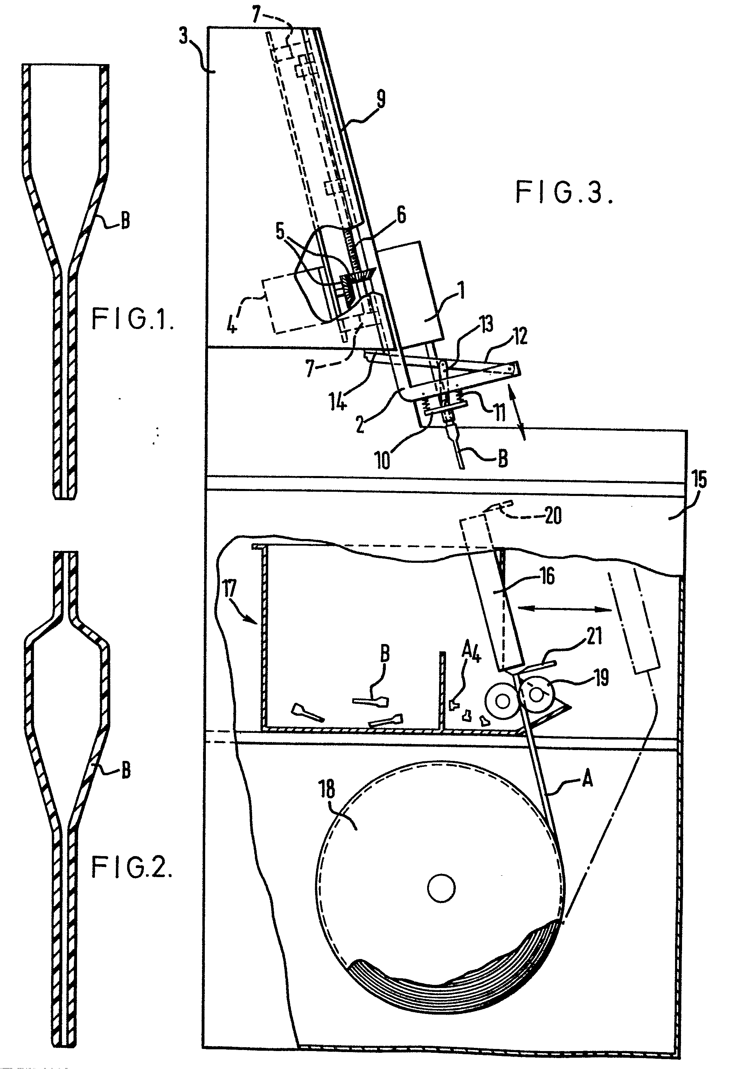

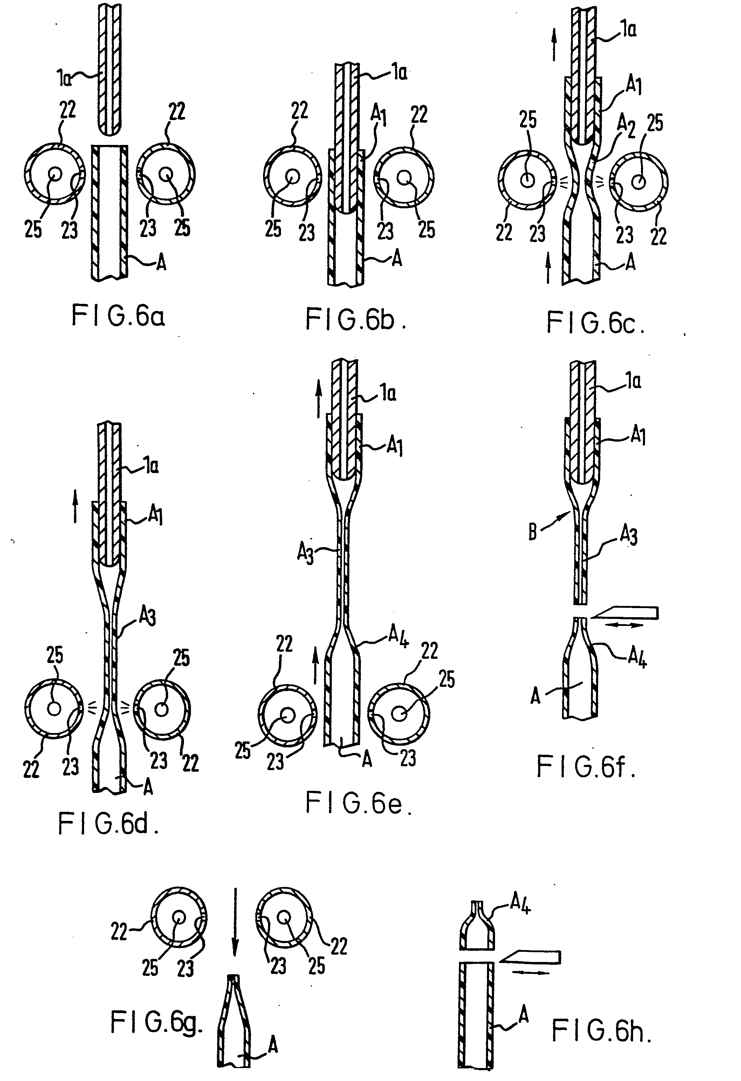

In Figure 3 a head block 1 carries a plurality of downwardly extending rods 1a to which synthetic polymer tubes A (Figs. 6a - 6h) are removably attached. The head block 1 is supported on a holder 2 mounted on a frame 3 so as to be capable of movement reciprocally and in a vertical direction. To achieve this a motor 4 attached to the frame 3 drives, a screw shaft 6 via bevel gears 5. The shaft moves up or down. It is rotatably supported at bearings 7 and these in turn are attached to the holder 2 which itself therefore moves vertically up or down along rails 9 on frame 3.

A stripper plate 10 is suspended beneath the holder 2 by means of spring members 11 and is pivotably connected to a link 13, which is in turn pivoted to a lever 12 itself pivoted to the front end of the holder 2. A stop 14 is attached to the frame 3 so as to limit the motion of the lever 12 upwards. The stripper plate 10 has a plurality of guide holes through each of which one of the attaching rods 1a is capable of relative slidable movement.

A base frame 15 supporting the frame 3 has an internal space in which a pipette-forming device 16 (described in more detail below) and a pipette-receiver 17 are disposed in such a way as to be forwardly movable together i.e. as a unit such means for joint movement of device 16 and receiver 17 is not shown in the drawing. Reels 18 for a wound supply of tubes A, each reel located for fitment upon an attaching rod 1a, are

disposed under the device 16 and receiver 17.

In this emnodiment, the tube A may be made from heat-shrinkable synthetic polymer and be guided to the forming device 16 by means of feed rollers 19, which are driven by a reversible motor (not shown) and stopped by means of brake members, also not shown. At upper and lower end of the pipette-forming device 16 are disposed cutters 20 and 21.

The pipette-forming device (Fig 5) comprises a heating arrangement including parallel spaced apart tubes 22 each tube having a plurality of through bores 23 opposed to those of the other tube. The tubes 22 are connected to an air blower 24. Each tube contains a central heater element 25. Thus hot air is blown out of the bores 23 to opposite sides of a row of supplied heat-shrinkable tubes A lying parallel to each other and extending upwards within the shell of the pipette-forming device 16.

In operation, the motor 4 drives the bevel gears 5 to cause the holder 2 to be moved downwards and insert the lower ends of the attaching rods 1a into the upper opening of the pipette-forming device 16. They enter upper endsof tubes A as the tubes A are supported by the feed rollers 19. Rotation of the feed rollers 19 shifts the upper ends of tubes A upwards so as to set each firmly on its attached rod la. As this is taking place, motor 4 is reversed and drives holder 2 upwards to a small extent attaching rods la and the tubes A also move upwards. Heated air is then on the outside of tubes A via 24, 22 and 23 so that the upper portions Al of the tubes A are sligtly shrunk and thus fixed firmly to the attaching rods la.

Feed rollers 19 continue to supply the tubes A upwardly. However, in the next stage the attaching rods la are upwardly moved even faster by control of motor 4.

At this stage the portions A2 beneath the portions Al are shrunk by the air-heating and become simultaneously stretched lengthwise. Thereafter, the feed rollers 19 are stopped by brake members, but the motor 4 operates continuously so as to pull the attaching rods la together with tubes A, until long "noses" A3 are formed. These have a reproducible inner diameter of small dimension, uniform along the length.

Blower 24 is switched off and the heater 25 is disengergized. A vacuum pump 28 pulls air thorugh bores 26 in the shell and into the forming device, thereby cooling the portion A3.

Feed rollers 19 are actuated again, at the same speed as that of the attaching rods 1a so as to supply the tubes A upwards. When the portion A3 emerges from the pipette-forming device 16, the attachign rods 1a and feed rollers 19 are stopped. The portions A3 are then cut from the bodies of the tubes A by cutter 20.

The motor 4 is next drive again in the direction such as to draw up the attachin rods 1a to a setting level. During such motion of the attachig rods 1a, the feed roller 19 is driven in reverse until the remaining portion A4 of the tube A is pulled back almost to the bottom opening of the pipette-forming device 16. When the feed roller 19 is stopped, the remaining portions A4 are cut from the bodies of the tubes A by knife 21 and drop down as waste into the receiver 17. At this stage, the pump 28 is switched off. Then, the pipette-forming device 16 and receiver 17 are jointly horizontally moved and a portion 17a formed in the receiver 17 (separate from the waste container for portions A4) is positioned under micro-pipettes B still attached to the attaching rods 1a.

The sequence of steps described above are also illustrated in the Figures 6(a) to 6(h).

When the holder 2 moves upwards still further by means of suitable actuation of motor 4, free end of the lever 12 is prevented from being moved upwards by the stop 14. This causes the stripper plate 10 to be moved downwards and this pushes of the micro-pipettes B toward the portion 17a.

Thus micro-pipettes B are produced utilising operating steps mentioned above.

The micro-pipette produced has a long "nose" of small internal diameter uniform along its length, (for example, between 0.3 and 0.7 mm) thereby to exhibit a long visible measuring display even with only small amounts of test material.

The second embodiment of equipment further includes a device for sub-dividing test material such as sera.

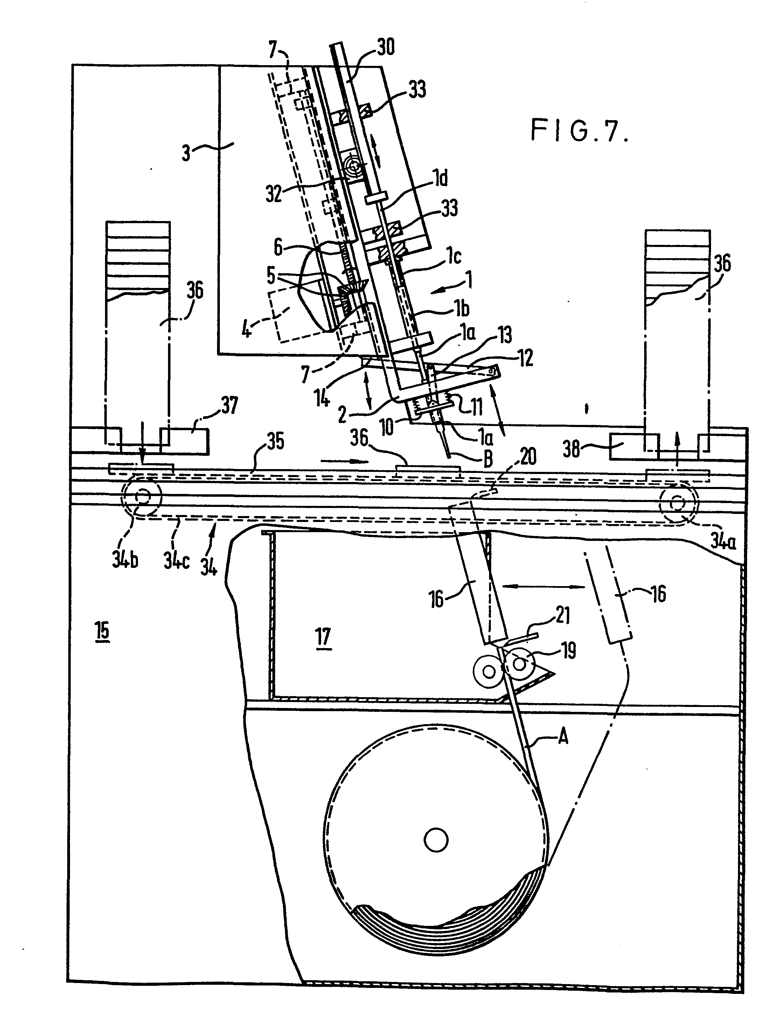

In this case as shown in Figure 7 the head block 1 comprises a plurality of cylinders 1b each connected to one of attaching rods 1a all of which are hollow. The cylinders 1b each enclose a piston 1d, all of which are connected to a rack member 30. The rack teeth are engaged with a pinion gear 31 driven by a motor 32 attached to the framne3. The pistons 1d and thus the attached rack member 30 are jointly slidably supported in bearings 33 mounted on the holder 2.

0182943

Over the base frame 15 is provided a belt conveyor 34 with a pair of endless belts 34a stretched between wheels 34b and 34c. A pair of parallel guide rails 35 are disposed along the top of the endless belts 34a, so as to guide a stocker 36 on the conveyer 34, as described below.

Means 37 for feeding stockers 36 from a stack to the conveyor 34 one by one, and means 38 for accumulating the stockers 36 one by one in another stack are provided to the front and rear portions of the base frame 15.

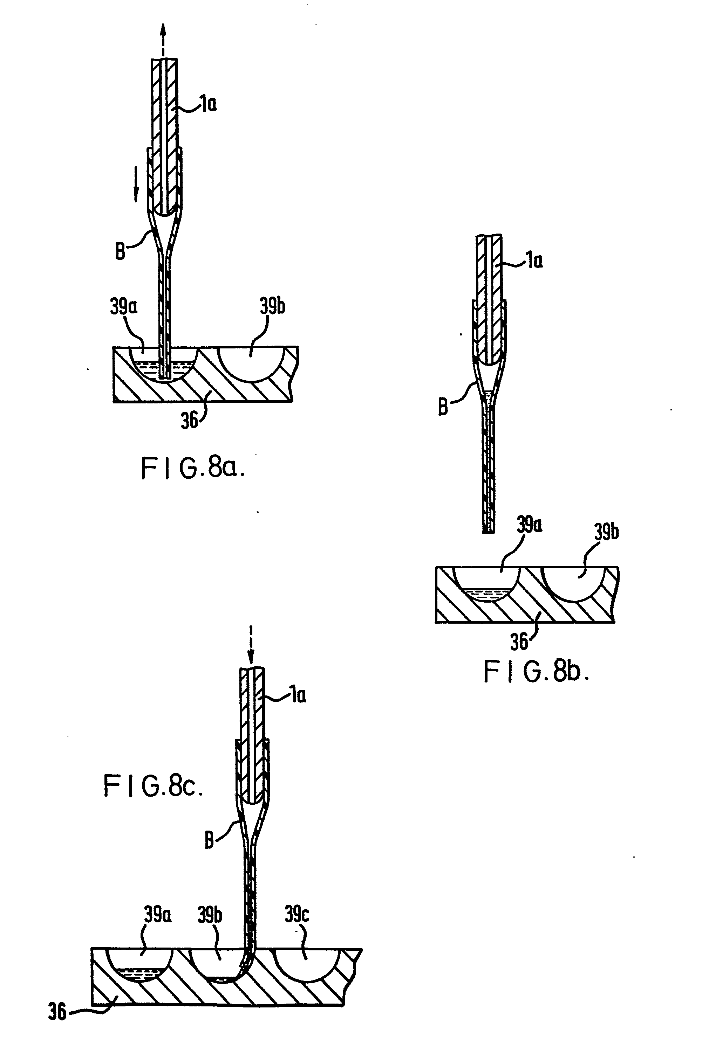

Operation may be a substage of that described above for pipette formation. Before they are pushed off by the stripper plate 10, the micro-pipettes B are moved downwards (by selectively driving the motor 4) when one of the stockers 36 arrives on conveyor 34 under the head block 1. The pipettes thus enter sample containers 39a in the stocker 36. As the motor 32 operates the rack member 30 is shifted so as to such test material upwards and withdraws pistons 1d into the pipettes as shown in Figure 8a.

Then the micro-pipettes B are jointly lifted by the motor 4 acting in reverse as shown in Figure 8(b). The conveyor 34 is then driven stepwise so that the stocker 36 is transferred step by step at a prescribed pitch.

The micro-pipettes B are then jointly lowered by the motor 4 so as to be inserted into the next row of sample containers 39b (figure 8c) and the motor 32 and rack 30 is moved to express the sample in the pipette, over as many subdivisional steps as necessary.

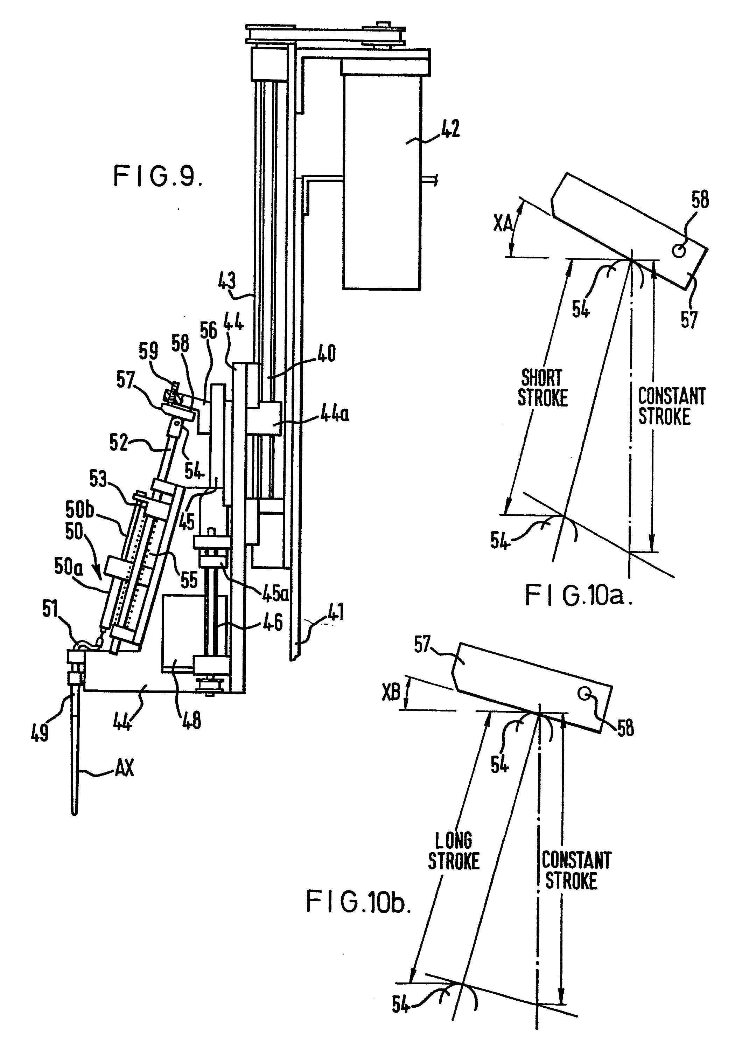

In order to suck test material into a plurality of micro-pipettes simultaneously and to ensure that they provide sub-divisional amounts exactly equal to one another, there is also provided a device for attachment to the above which divides the test material exactly from the micro-pipettes to the correspondig receivers as shown in Figure 9.

The device comprises a vertical screw-threaded shaft 40 supported on a frame 41 and rotatable by driving motor 42. Guide rails 43 are disposed parallel to the shaft 40. A carriage 44 is movable relative to the frame 41 is movable relative to the frame 41 in a vertical direction along the rails 43 because its holder 44a engages to the shaft 40. A sub-carriage 45 is also movable relative to the carriage 44 in a vertical direction, by virtue of its holder 45a turnably engaging to a screw-threaded shaft 46 supported in bearings 47 attached to the carriage 44 and rotatable by driving motor 48 carried on the carriage 44.

A plurality of parallel attaching rods 49 for holding corresponding micro-pipettes Ax, and communicate by feasible portions 51 with a corresponding plurality of hollow cylinders 50a each with a piston 50b slidably inserted therein slidably inserted therein.

The device further has a guide rod 52 arranged in parallel to each piston 50b being engaged therewith by means of an engaging member 53. A contact roller surface 54 is provided at the top end of each guide rod 52, and a spring member 55 surrounds each guide rod to bias the engaging member 53 upwards.

The guide rods 52 together with the pistons 50b are slidably supported in a direction inclined to that of the movement of the carriage 44 at a preselected or selectable angle. The sub-carriage 45 includes an adjuster 56 attached to the front at the top of the sub-carriage 45. Push members 57 corresponding one to each of the guide rods 52 are pivoted to the adjuster 56 by means of pins 58 and push the contact toller surfaces 54 individually, in dependence upon the setting of adjusting screws 59 threaded through the adjuster 56, which settings may be individually adjusted.

The relation between the inclinations and the piston strokes of the piston/cylinder assemblies 50, when the sub-carriage 45 is vertically moved by the motor driving motion, is illustrated by two examples shown in Figure 10(a) and (b). The example shown in Figure 10(a) has a small piston stroke for the constant stroke L of the sub-carriage 45, being the case where one of the push members 57 is adjusted at a large angle XA. The exampe shown in Figure 10 (b) has a large piston stroke for the same constant stroke L of the sub-carriage 45 since its the push member 57 is adjusted at a small angle XB.

Accordingly, when many piston cylinder assemblies 50, their corresponding attaching rods 49 and the micro-pipettes Ax are used simultaneously to divide test material into many receivers in exactness, the individual adjustment facility given by readily accessible screws 59 is very important and effective.

CLAIMS

1.  A micro-pipette of synthetic polymeric material characterised by comprising a long "nose" region of small internal diameter uniform along its length.

2.  A micro-pipette as claimed in claim 1 characterised in that it is formed by stretching a synthetic polymer tube which is heated over part of its length and thereafter severing the tube to define and separate the said micro-pipette.

3.  A micro-pipette as claimed in claim 2 made from heat-shrinkable synthetic polymeric tubing.

4.  A device for manufacturing a micro-pipette as claimed in claim 1, characterised in that it comprises: means for engagement with a leading end of the said tube; means for heating part of the length of the said tube spaced from said leading end; means permitting relative displacement between the engagement means and the remainder of the tube beyond the heated part, whereby the heated part of the tube is stretched to a smaller diameter; and severing means transversely movable to cut at least the smaller diameter portion thereby to separate a micro-pipette from the tube.

5. A device as claimed in claim 4 characterised in that it comprises a drive for the engagement means capable of imparting forward and rearward movement in the tube direction; a separate drive for the tube capable of imparting forward, rearward or braking motion to the tube; and a severing means constituted by an upper cutter above the heating means and a lower cutter below the heating means; positioning of the tube for heating and cutting, and stretching of the tube for formation of the smaller diameter portion being achieved by selective operation of the two separate drives.

6. A device as claimed in claim 5, characterised in that the engagement means, the drives, the heating means, and the severing means are adapted to operate in common on a plurality of parallel synthetic polymeric tubes.

7. A device as claimed in clim 6 characterised in that a perforate stripper plate is provided, with each perforation slidably accommodating an engagement member for a single tube end, the plate being movable upwards to a limit position whereby upon withdrawal of the engagement means jointly carrying all engagement members the plate reaches its limit position and thereafter strips the micro-pipettes from the engagement members.

8. A device as claimed in claim 6 or 7 characterised in that it further comprises; a conveyor means for stepwise transfer of a multichambered stock member beneath the engagement means; further drive means to mole the plurality of formed micro-pipettes towards and away from the said stock member to enter and leave a row of the said chambers at each stepwise transfer; and means for varying air pressure within the said micro-pipettes whereby liquid may be drawn up or expressed from the micro-pipette at each stepwise transfer.

9. A device for adjusting samples of liquid test material to exact subdivision within an array of like receivers, characterised in that it comprises: a vertically movable carriage; an inclined array of piston/ cylinder arrangements each individually attached to draw up or express liquid from a micro-pipette dispenser; and an operating rod parallel to each piston having an arcuate surface at or near its upper end upon which the downward motion of the vertically movable carriage can be transferred by virtue of horizontally pivoted push members each having an individual adjusmtment means to adjust the initial inclination of its undersurface against the respective rod arcuate surface, whereby a uniform vertical movement of the carriage is individually and closely adjustable to provide different length strokes of each operating rod and thus adjust for differences in pipette volume.

0182943

FIG.1.

FIG.2.

FIG.3.

2/6

0182943

FIG.4.

FIG.5.

FIG.6a

FIG.6b.

FIG.6c.

FIG.6d.

FIG.6e.

FIG.6f.

FIG.6g.

FIG.6h.

FIG.7.

FIG.8a.

FIG.8b.

FIG.8c.

0182943

FIG.9.

FIG.10a.

SHORT STROKE

CONSTANT STROKE

XA

54

57

58

FIG.10b.

LONG STROKE

CONSTANT STROKE

XB

54

57

58

42

43

59 58 56 44

57

52

53

50b
50

50a

51

49 44 48

AX

40

44a

54

45

55

45a

46

41

European Patent
Office

0182943

## CLAIMS INCURRING FEES

The present European patent application comprised at the time of filing more than ten claims.

☐ All claims fees have been paid within the prescribed time limit. The present European search report has been drawn up for all claims.

☐ Only part of the claims fees have been paid within the prescribed time limit. The present European search report has been drawn up for the first ten claims and for those claims for which claims fees have been paid,

namely claims:

☐ No claims fees have been paid within the prescribed time limit. The present European search report has been drawn up for the first ten claims.

## ✗ LACK OF UNITY OF INVENTION

The Search Division considers that the present European patent application does not comply with the requirement of unity of invention and relates to several inventions or groups of inventions,

namely:

1) Claims 1-8.

2) Claim 9.

☐ All further search fees have been paid within the fixed time limit. The present European search report has been drawn up for all claims.

☐ Only part of the further search fees have been paid within the fixed time limit. The present European search report has been drawn up for those parts of the European patent application which relate to the inventions in respect of which search fees have been paid,

namely claims:

☒ None of the further search fees has been paid within the fixed time limit. The present European search report has been drawn up for those parts of the European patent application which relate to the invention first mentioned in the claims.

namely claims: 1-8

European Patent Office

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A- 3 141 336 (OATES) <br><br> * Column 1, lines 10-23, 55-56 and 66,67; column 2, lines 5-7 * | <br><br> 1-3 | B 01 L 3/02 <br> G 01 N 35/06 <br> B 29 C 55/22 |
| Y | | 4 | |
| | --- | | |
| Y | US-A- 3 737 501 (DUNIPACE) <br><br> * Claim 1 * | <br><br> 4 | |
| | --- | | |
| A | FR-A- 2 447 751 (FAURE) <br><br> * Page 3, line 17 - page 4, line 37 * | <br><br> 4,6-8 | |
| | | | TECHNICAL FIELDS SEARCHED (Int. Cl.4) <br><br> B 01 L <br> G 01 N <br> B 29 C |

~~The present search report has been drawn up for all claims~~

| Place of search | Date of completion of the search | Examiner |
|---|---|---|
| The Hague | 02-07-1985 | VAN OORSCHOT |